# EUROPEAN PATENT APPLICATION

(11) **EP 2 065 831 A1**
(43) Date of publication of application: **03.06.2009**
(21) Application number: 06810332.4
(22) Date of filing: 20.09.2006
(51) Int. Cl.: G06F 21/22

(54) **INFORMATION PROCESSOR AND STARTING METHOD**

(71) Applicant: Fujitsu Limited, Kawasaki-shi, Kanagawa 211-8588 (JP)
(72) Inventor: SUZUKI, Masato, Kawasaki-shi, Kanagawa 211-8588 (JP); KOTANI, Seigo, Kawasaki-shi, Kanagawa 211-8588 (JP)
(74) Representative: Stebbing, Timothy Charles
(86) International application number: PCT/JP2006/318636
(87) International publication number: WO 2008/035412

(57) **Abstract**

An information processing apparatus (100) has implemented therein a security chip (150) that independently performs a predetermined process, and the security chip (150) singly starts up prior to a main LSI, such as a CPU (130) or the entire system of the information processing apparatus (100), at the time of power-up of the information processing apparatus (100). The security chip (150) then obtains biometric information of the user from a biometric sensor (120), determines based on the obtained biometric information and biometric information of the user stored in advance whether the information processing apparatus is allowed to start up and, when determining that the information processing apparatus is allowed to start up, starts up the main LSI, such as the CPU (130) of the information processing apparatus (100), or the entire system.

## Description

### TECHNICAL FIELD

The present invention relates to information processing apparatuses and others having a chip implemented therein for independently performing a predetermined process and, in particular, to an information processing apparatus and start-up method capable of solving a problem of information leakage.

### BACKGROUND ART

In recent years, to solve problems of leakage of information stored in an information processing apparatus (such as confidential information and information regarding user privacy) and others, attempts have been made to implement a biometric authentication function of protecting the information stored in the information processing apparatus by using biometric information of a user himself or herself, such as fingerprint, iris, veins, and countenance in the information processing apparatus. In such a conventional biometric authentication function, after the information processing apparatus is powered up, a system, such as an OS (Operating System) or an authentication program achieving the biometric authentication function incorporated in the information processing apparatus, starts up. Thereafter, biometric information is obtained from the user, and then it is determined whether the information processing apparatus is allowed to be operated.

Note that Patent Document 1 suggests an information managing apparatus capable of flexibly and strictly updating a program and data for authentication of user.

Patent Document 1: International Publication Pamphlet No. WO2005/106620

### DISCLOSURE OF INVENTION

### PROBLEM TO BE SOLVED BY THE INVENTION

However, in the conventional technology, the authentication function (security function) with the biometric information of the user is not effective until the system incorporated in the information processing apparatus starts up. This poses a problem in which information stored in the information processing apparatus cannot be protected during a period from the time when the information processing apparatus starts up to the time when the authentication function becomes effective.

That is, in the state before start-up of the system such as the OS immediately after power-up, any inner information is unprotected. This poses a problem in which the information inside of the information processing apparatus may be easily stolen with the start-up of a guest OS or the like with an external OS start-up method (such as an FDD or CD-ROM).

The present invention is to solve the problems of the conventional technology, and an object is to provide an information processing apparatus and start-up method capable of protecting information stored in the information processing apparatus.

### MEANS FOR SOLVING PROBLEM

To solve the problems as described above and to achieve an object, an information processing apparatus according to one aspect of the present invention includes a chip implemented therein to independently perform a predetermined process, and the chip includes a storage unit that stores biometric information of a user allowed to operate the information processing apparatus as biometric authentication information, and a biometric determining unit that obtains, when obtaining a request for starting up the information processing apparatus, biometric information of the user and determines whether the information processing apparatus is allowed to start up, based on the biometric information and the biometric authentication information.

Further, in the above-described aspect of the present invention, the storage unit may further store information about environment regarding the information processing apparatus, and the chip may further include an environment determining unit that determines, when a request for starting up the information processing apparatus is obtained, whether the information processing apparatus is allowed to start up, based on the information about environment stored in the storage unit.

Further, in the above-described aspect of the present invention, the information processing apparatus may include a controlling device that controls the information processing apparatus in its entirety except the chip, and the chip may further include a start-up controlling unit that controls start-up of the controlling device based on the determination results of the biometric determining unit and the environment determining unit.

Further, in the above-described aspect of the present invention, the chip may further include an environment-information updating unit that obtains the information about environment regarding the information processing apparatus and updates the information about environment stored in the storage unit.

Further, a start-up method according to another aspect of the present invention is a start-up method of an information processing apparatus including a chip implemented therein to independently perform a predetermined process, and the method includes storing in a storage unit by the chip, biometric information of a user allowed to operate the information processing apparatus as biometric authentication information, and biometrically determining by the chip, when obtaining a request for starting up the information processing apparatus, by obtaining biometric information of the user and determining whether the information processing apparatus is allowed to start up, based on the biometric information and the biometric authentication information.

Further, in the above-described aspect of the present invention, the storing may further include storing information about environment regarding the information processing apparatus, and the method may further include environmentally determining by the chip, when a request for starting up the information processing apparatus is obtained, whether the information processing apparatus is allowed to start up, based on the information about environment stored in the storage unit.

Further, in the above-described aspect of the present invention, the information processing apparatus may includes a controlling device that controls the information processing apparatus in its entirety except the chip, and the method may further include controlling by the chip, start-up of the controlling device based on the determination results in the biometrically determining and the environmentally determining.

Further, in the above-described aspect of the present invention, the start-up method may further includes updating by the chip, the information about environment stored in the storage unit by obtaining the information about environment regarding the information processing apparatus.

### EFFECTS OF THE INVENTION

According to the present invention, in the chip implemented that independently performs a predetermined process, biometric information of a user allowed to operate the information processing apparatus is stored as biometric authentication information, and when a request for starting up the information processing apparatus is obtained, biometric information of the user is obtained, and it is determined whether the information processing apparatus is allowed to start up, based on the biometric information and the biometric authentication information. Therefore, information leakage at the time of power-up of the information processing apparatus can be prevented.

Also, according to the present invention, the chip further stores therein information about environment regarding the information processing apparatus, and determines, when a request for starting up the information processing apparatus is obtained, whether the information processing apparatus is allowed to start up, based on the information about environment stored in the storage unit. Therefore, safety of the information processing apparatus can be increased.

Furthermore, according to the present invention, the information processing apparatus includes a controlling device that controls the information processing apparatus in its entirety except the chip, and the chip controls the start-up of the controlling device based on the determination results based on the biometric information and the information about the environment. Therefore, stealing of information during a period from the time when the information processing apparatus is powered up to the time when the controlling device starts up can be prevented.

Still further, according to the present invention, the chip further obtains the information about environment regarding the information processing apparatus and updates the information about environment. Therefore, unauthorized peripheral devices, programs, and others can be eliminated from the information processing apparatus, thereby increasing safety of the information processing apparatus.

### BRIEF DESCRIPTION OF DRAWINGS

Fig. 1 is a functional block diagram of a configuration of an information processing apparatus according to an embodiment;
Fig. 2 is a drawing for explaining electronic certificates stored in a secure memory;
Fig. 3 is a drawing for explaining biometric authentication information stored in the secure memory;
Fig. 4 is a drawing for explaining inner-device information stored in the secure memory;
Fig. 5 is a flowchart of a start-up process according to the present embodiment; and
Fig. 6 is a drawing of hardware configuration of the information processing apparatus.

### DESCRIPTION OF REFERENCE NUMERALS

- 10: bus
- 11, 130: CPU
- 12: ROM
- 13: RAM
- 14: HDD
- 15: HD
- 16: FDD
- 17: FD
- 18: display
- 19, 110: communication I/F
- 20: input key
- 21, 120: biometric sensor
- 22, 150: security chip
- 30: network
- 100: information processing apparatus
- 140: memory/storage
- 151: LSI unique-key storage unit
- 152: secure memory
- 153: communication authenticating unit
- 154: monitoring unit
- 155: verifying unit
- 156: biometric authenticating unit
- 157: inner-device information authenticating unit
- 158: start-up controlling unit
- 160: software

### BEST MODE(S) FOR CARRYING OUT THE INVENTION

An embodiment of the information processing apparatus and start-up method according to the present invention is explained in detail below with reference to the drawings.

### EMBODIMENT

First, the general outlines and features of the information processing apparatus according to an embodiment are explained. The information processing apparatus according to the present embodiment has implemented therein a security chip (for example, an LSI with a biometric authentication function as disclosed in International Publication No. 2005/106620 pamphlet) that independently performs a predetermined process. This security chip singly starts up prior to start-up of a main LSI, such as a CPU of the information processing apparatus, or prior to start-up of the entire system of the information processing apparatus.

The security chip then obtains biometric information (biometric information such as fingerprint, iris, veins, and countenance) of the user from a sensor for biometric authentication connected to the outside, determines based on the obtained biometric information and biometric information of the user stored in advance whether the information processing apparatus is allowed to start up, and, when determining that the information processing apparatus is allowed to start up, starts up the main LSI, such as a CPU of the information processing apparatus, or the entire system.

In this manner, the security chip starts up prior to the CPU or the like of the information processing apparatus, and determines whether the information processing apparatus is allowed to start up. Therefore, it is possible to prevent leakage of information recorded in the information processing apparatus or stealing of the information by abusing a security hole.

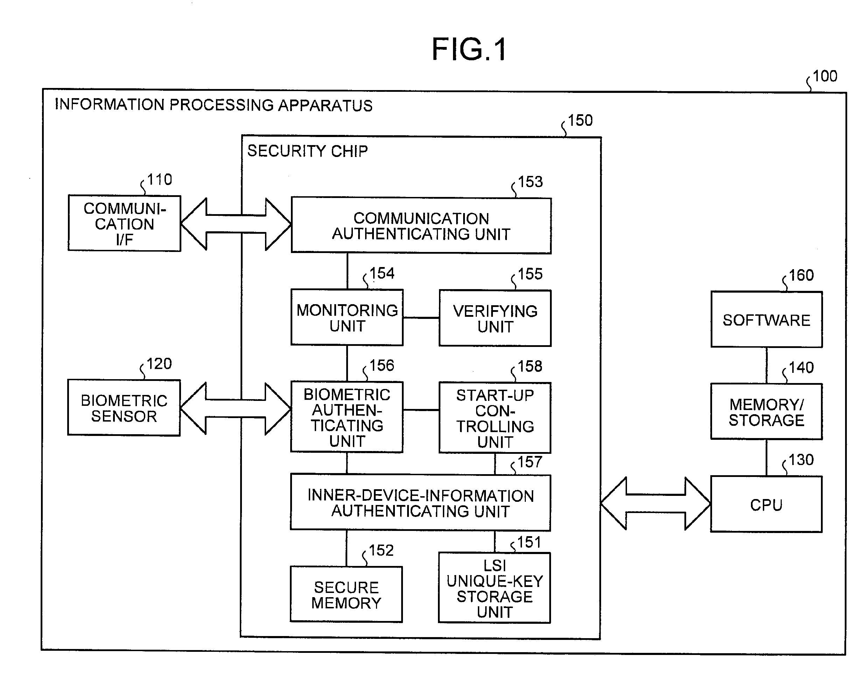

Next, the configuration of the information processing apparatus according to the present embodiment is explained. Fig. 1 is a functional block diagram of the configuration of the information processing apparatus according to the present embodiment. As depicted in Fig. 1, the information processing apparatus 100 is configured to include a communication I/F (interface) 110, a biometric sensor 120, a CPU 130, a memory/storage 140, and the security chip 150. The memory/storage 140 has stored therein various software 160.

The communication I/F 110 controls interfacing between a network and the inside and controls input/output of data from an external device. As the communication I/F 110, a modem or a LAN (Local Area Network) adaptor can be adopted, for example. Here, although not shown, the information processing apparatus 100 performs data communication via the communication I/F 110 with a terminal at an authenticating station (certificate authority) and a service-provider terminal managed by a vender or maker developing execution programs and various data associated with various services or by a manufacturer or a distributor of the information processing apparatus 100. Note that start-up of the communication I/F 110 is controlled by the security chip 150.

The biometric sensor 120 can be implemented by a fingerprint sensor, a camera, or a microphone, for example. The fingerprint sensor is a device that detects asperities of a fingerprint at approximately every 50 micrometers for conversion to an electric signal. As a fingerprint reading technique, a semiconductor type, an optical type, a pressure sensitive type, or a thermal type can be used, for example. The camera is a biometric sensor that takes a picture of an iris or retina of an eyeball. Also, the microphone is a biometric sensor that detects a voice print representing a feature of voice.

The CPU 130 is a device that controls the process of the entire information processing apparatus. Note that the CPU 130 according to the present embodiment does not start up at the time of power-up of the information processing apparatus 100 but starts up after being allowed by the security chip 150 to start up, thereby performing various processes.

The memory/storage 140 is a storage device that stores various pieces of information for use in the CPU 130 and others. The memory/storage 140 may be provided in any area inside of the security chip 150 or outside of the security chip 150 as long as it is in the information processing apparatus 100. When provided inside of the security chip 150, the memory/storage 140 can be prevented from being removed or tampered.

The security chip 150 is implemented in the main board of the information processing apparatus. The security chip 150 is a chip that provides only a basic function for achieving security and privacy. Also, the security chip 150 is defined by TCG (Trusted Computing Group) specifications. The security chip 150 implemented in the single information processing apparatus 100 is configured not to be able to be implemented on another information processing apparatus. When the security chip 150 is removed from the information processing apparatus 100, the information processing apparatus 100 cannot start up. Also, when the information processing apparatus is powered up, the security chip 150 starts up prior to the communication I/F 110, the CPU 130, the memory/storage 140, and others of the information processing apparatus.

The security chip 150 has included therein an LSI unique-key storage unit 151, a secure memory 152, a communication authenticating unit 153, a monitoring unit 154, a verifying unit 155, a biometric authenticating unit 156, an inner-device-information authenticating unit 157, and a start-up controlling unit 158.

The LSI unique-key storage unit 151 is a storage unit that has stored therein an encryption key unique to the security chip 150. The secure memory 152 is a storage unit that has stored therein various information for use in the security chip 150.

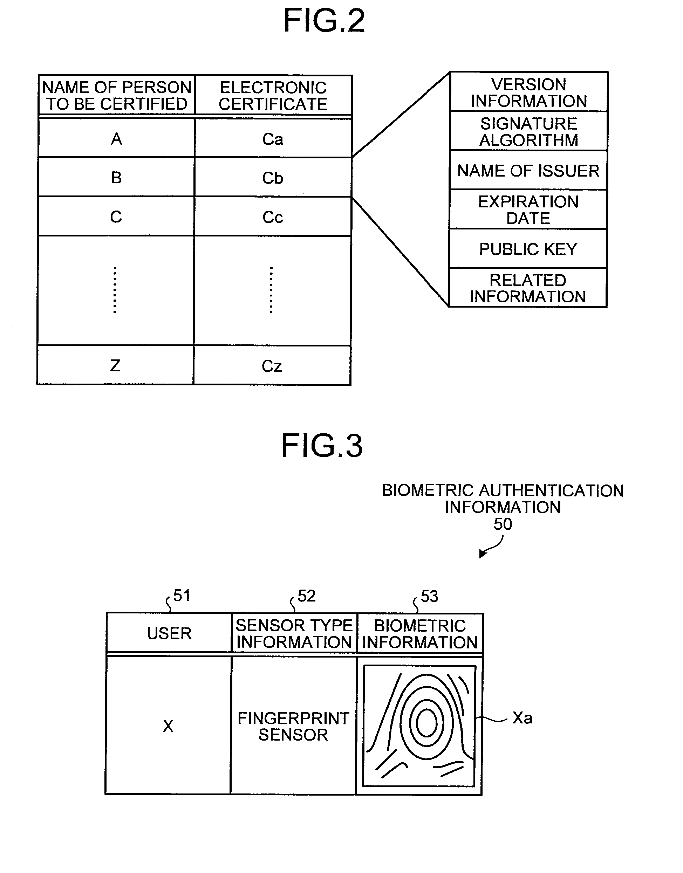

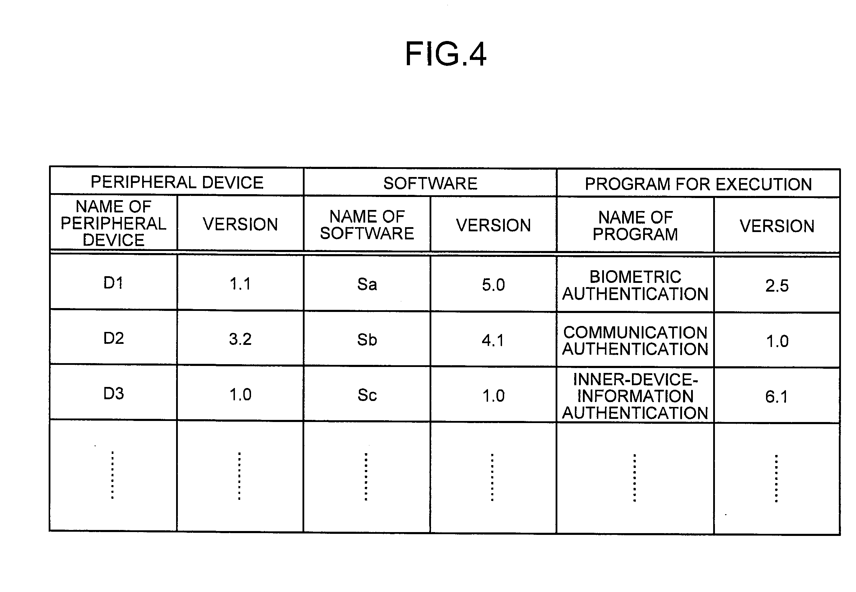

Here, the secure memory 152 is explained. Fig. 2 is a drawing for explaining electronic certificates stored in the secure memory 152. Fig. 3 is a drawing for explaining biometric authentication information stored in the secure memory 152. Fig. 4 is a drawing for explaining inner-device information stored in the secure memory 152.

In Fig. 2, electronic certificates Ca to Cz are stored for respective persons to be certified. "Persons to be certified" are persons certified with the electronic certificates Ca to Cz, such as users, makers, venders, and authenticating stations. Also, the electronic certificates Ca to Cz each contain version information, signature algorithm, the name of the issuer, expiration date, public key, and other related information. These electronic certificates Ca to Cz are managed with a secure method, such as encryption, by the inner-device-information authenticating unit 157 included in the security chip 150.

In Fig. 3, biometric authentication information 50 is formed of user name 51, sensor type information 52, and biometric information 53. In Fig. 3, by way of example, a user "X" allowed to operate the information processing apparatus 100 registers image data "Xa" of the fingerprint of the user "X" detected by a "fingerprint sensor" as the biometric information 53. The biometric authentication information 50 is encrypted and stored by the inner-device-information authenticating unit 157 included in the security chip 150.

In Fig. 4, as inner-device information (i.e., environmental information regarding the information processing apparatus 100), names and version information of peripheral devices, software 160, and various pieces of programs to be executed installed on each hardware are stored.

The communication authenticating unit 153 is a processing unit that ensures safety of communication with outside of the information processing apparatus 100, for example, a service-provider terminal, an authenticating station's terminal, and others connected via a network. Specifically, the communication authenticating unit 153 performs identity authentication (PKI (Public Key Infrastructure) authentication) with an electronic certificate using an authenticating station, thereby making it possible to determine whether a person communicates with outside is a person authorized by the authenticating station.

The monitoring unit 154 is a processing unit that monitors passing of information inside of the information processing apparatus 100. The verifying unit 155 is a processing unit that performs verification of validity of information input from the outside to the security chip 150 and matching verification when safety of communication with the outside is authenticated by the communication authenticating unit 153.

The biometric authenticating unit 156 is a processing unit that authenticates whether the biometric information detected by the biometric sensor 120 and the biometric authentication information of the user registered in the secure memory 152 (refer to Fig. 3) match each other. In the biometric authenticating unit 156, it can be determined whether the person operating the information processing apparatus 100 is an authorized user.

Also, when accepting a request for starting up the information processing apparatus 100 (when the information processing apparatus 100 is powered up), the biometric authenticating unit 156 obtains biometric information of the user from the biometric sensor 120, compares it with the biometric authentication information stored in the secure memory 152 to determine whether they match each other, and then outputs the determination result to the start-up controlling unit 158.

The inner-device-information authenticating unit 157 is a processing unit that authenticates information inside the secure memory 152 (inner-device information). The inner-device information is called environmental information, including information about peripheral devices obtained from the peripheral devices connected to the information processing apparatus 100 (for example, device names and version information), information about software 60 installed in the information processing apparatus 100 (for example, software names and version information), and various information stored in the memory/storage 140 (for example, electronic certificates).

Also, the inner-device-information authenticating unit 157 confidentially manages the information stored in the secure memory 152. Specifically, the information obtained by the inner-device-information authenticating unit 157 is encrypted with a unique encryption key stored in the LSI unique-key storage unit 151 and is then stored in the secure memory 152. On the other hand, when a call comes from another hardware, the encrypted information is decrypted with a decryption key (stored in the LSI unique-key storage unit 151) paired with the encryption key. With this encryption and decryption, it is possible to authenticate that no tampering occurs in the information processing apparatus 100.

Also, when accepting a request for starting up the information processing apparatus 100 (when the information processing apparatus 100 is powered up), the inner-device-information authenticating unit 157 obtains inner-device information (information about environment regarding the information processing apparatus 100) stored in the secure memory 152 to authenticate the inner-device information. That is, the inner-device-information authenticating unit 157 determines whether any unauthorized software not allowed to be used has been installed in the information processing apparatus 100 or whether any unauthorized peripheral device is connected to the information processing apparatus 100, and then outputs the determination result to the start-up controlling unit 158. It is assumed herein that the inner-device-information authenticating unit 157 previously retains information about software allowed for use and information about peripheral devices allowed for use.

Also, the inner-device-information authenticating unit 157 obtains information regarding a peripheral device from the peripheral device connected to the inside of the information processing apparatus and information regarding software 160 installed inside of the information processing apparatus 100 on a regular basis (or, for example, immediately before the process of the information processing apparatus 100 ends to stop supplying power), and updates the inner-device information (information regarding environment of the information processing apparatus 100) stored in the secure memory 152.

The start-up controlling unit 158 is a processing unit that obtains the determination results from the biometric authenticating unit 156 and the inner-device-information authenticating unit 157 and controls start-up of the CPU 130 based on the obtained determination results. Specifically, when the biometric information of the user matches the biometric authentication information and the inner-device information is appropriate, the start-up controlling unit 158 starts up the CPU 130 and the communication I/F 110.

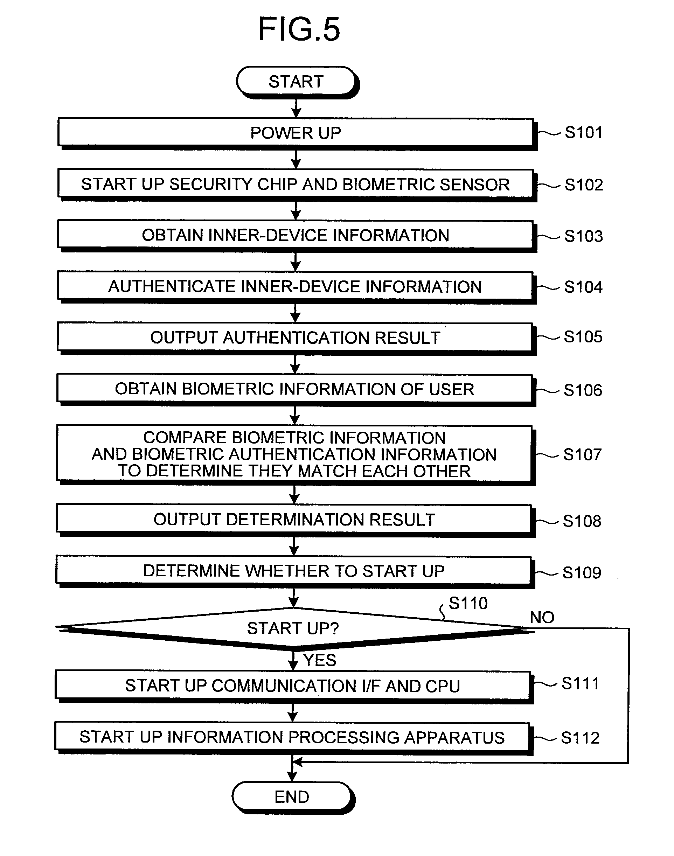

Next, a start-up process of the information processing apparatus according to the present embodiment is explained. Fig. 5 is a flowchart of the start-up process according to the present embodiment. As depicted in Fig. 5, when the information processing apparatus 100 is powered up (step S101), the security chip 150 and the biometric sensor 120 start up (step S102).

The inner-device-information authenticating unit 157 then obtains inner-device information (environmental information) from the secure memory 152 (step S103), authenticates the inner-device information (step S104), and then outputs the authentication result (the determination result as to whether the inner-device information is appropriate) to the start-up controlling unit 158 (step S105).

Subsequently, the biometric authenticating unit 156 obtains biometric information of the user from the biometric sensor 120 (step S106), compares the biometric information and the biometric authentication information to determine whether they match each other (step S107), and then outputs the determination result to the start-up controlling unit 158 (step S108).

The start-up controlling unit 158 then determines based on the obtained determination result whether to start up the CPU 130 and the communication I/F 110 (step S109) and, when determining not to start up ("No" at step S110), ends the process without doing anything, and when determining to start up ("Yes" at step S110), starts up the communication I/F 110 and the CPU 130 (step S111). After starting up, the CPU 130 starts up various devices and the system of the information processing apparatus 100 (step S112).

In this manner, the start-up controlling unit 158 controls start-up of the CPU 130 based on the determination results of the biometric authenticating unit 156 and the inner-device-information authenticating unit 157. Therefore, it is possible to prevent the information stored in the information processing apparatus 100 from being stolen by malicious third party.

As has been explained above, the information processing apparatus 100 according to the embodiment includes the security chip 150 that independently performs a predetermined process, and the security chip 150 singly starts up prior to a main LSI, such as the CPU 130 of the information processing apparatus 100, or the entire system at the time of power-up of the information processing apparatus 100. The security chip 150 then obtains biometric information of the user from the biometric sensor 120, determines based on the obtained biometric information and biometric information of the user stored in advance whether the information processing apparatus is allowed to start up and, when determining that the information processing apparatus 100 is allowed to start up, starts up the main LSI, such as the CPU 130 of the information processing apparatus 100, or the entire system. Therefore, it is possible to prevent leakage of information recorded in the information processing apparatus or stealing of the information by abusing a security hole.

For example, a stolen information processing apparatus is prevented from being started up using a guest OS or the like, such as an FDD or CD-ROM, and information in a storage medium of the information processing apparatus is prevented from being stolen. Also, the user does not have to memorize a burdensome combination of a log-in ID/password. Furthermore, since this system does not depend on software, such as an OS, the user does not have to worry about danger, such as a security hole of the OS.

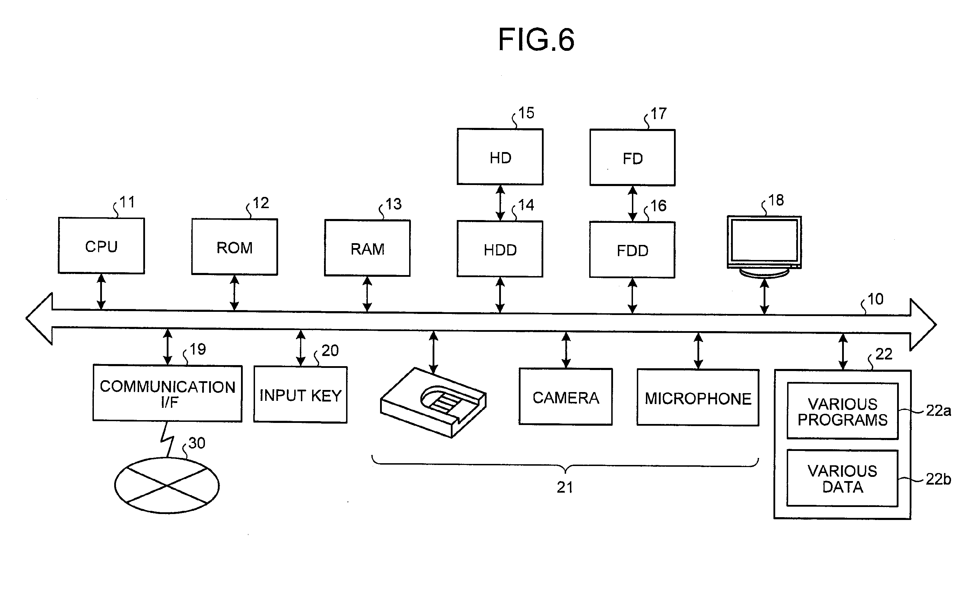

Next, the hardware configuration of the information processing apparatus 100 depicted in the present embodiment is explained. Fig. 6 is a drawing of hardware configuration of the information processing apparatus. In Fig. 6, the information processing apparatus is configured of a CPU 11, a ROM 12, a RAM 13, a HDD (hard disk drive) 14, a HD (hard disk) 15, a FDD (flexible disk drive) 16, a FD (flexible disk) 17, a display 18, a communication I/F 19, an input key (including a keyboard and a mouse) 20, a biometric sensor 21, and a security chip 22. Also, each component is connected to a bus 10.

Here, the CPU 11 controls the entire information processing apparatus. The ROM 12 has stored therein programs, such as a boot program. The RAM 13 is used as a work area of the CPU 11. The HDD 14 controls read/write of data to the HD 15 according to the control of the CPU 11. The HD 15 has stored therein data written under the control of the HDD 14.

The FDD 16 controls read/write of data to the FD 17 according to the control of the CPU 11. The FD 17 stores data written under the control of the FDD 16, or causes the data stored in the FD 17 to be read by the information processing apparatus.

Also, as a removable recording medium, in addition to the FD 17, a CD-ROM (CD-R, CD-RW), MO, DVD (Digital Versatile Disk), or a memory card may be used.
The display 18 displays data including a cursor, an icon, or a tool box, such as documents, images, and function information. As the display 18, for example, a CRT, a TFT liquid-crystal display, or a plasma display can be adopted.

The communication I/F 19 corresponds to the communication I/F 110 depicted in Fig. 1, and is connected to a network 30, such as the Internet. The input key 20 includes keys for inputs of characters, numerals, various instructions, and others, to perform data input. Also, a touch-panel-type input pad or a numeric keypad may suffice.

The biometric sensor 21 and the security chip 22 correspond to the biometric sensor 110 and the security chip 150 depicted in Fig. 1, respectively. Also, the security chip 22 has stored therein various programs 22a for achieving various processing units depicted in Fig. 1, and various processes are performed from these programs. These various processes correspond to the communication authenticating unit 153, the monitoring unit 154, the verifying unit 155, the biometric authenticating unit 156, the inner-device-information authenticating unit 157, and the start-up controlling unit 158 depicted in Fig. 1. Also, the security chip 150 has stored therein various data 22b (corresponding to the information, such as the biometric authentication information, the inner-device information, and LSI unique-key information explained in the embodiment) for use in performing various processes.

In the foregoing, while the embodiments of the present invention have been explained, the present invention is not meant to be restricted to these, and can be implemented with various different embodiments within the range of the technical idea described in the claims.

Furthermore, among the processes explained in the embodiments, all or part of the processes explained as being automatically performed can be manually performed, or all or part of the processes explained as being manually performed can be automatically performed through a known method.

In addition, the process procedure, the control procedure, specific names, and information including various data and parameters in the specification and drawings can be arbitrarily changed unless otherwise specified.

Furthermore, each component depicted is conceptual in function, and is not necessarily physically configured as depicted. That is, the specific patterns of distribution and unification of the components are not meant to be restricted to those depicted in the drawings. All or part of the components can be functionally or physically distributed or unified in arbitrary units according to various loads and the state of use.

### INDUSTRIAL APPLICABILITY

As explained in the foregoing, the information processing apparatus and start-up method according to the present invention is useful for an information processing apparatus storing important information and, in particular, is suitable in the case of solving the problem of information leakage by eliminating a security hole at the time of start-up of the information processing apparatus.

## Claims

1. An information processing apparatus comprising a chip implemented in the information processing apparatus to independently perform a predetermined process,
the chip including
a storage unit that stores biometric information of a user allowed to operate the information processing apparatus as biometric authentication information; and
a biometric determining unit that obtains, when obtaining a request for starting up the information processing apparatus, biometric information of the user and determines whether the information processing apparatus is allowed to start up, based on the biometric information and the biometric authentication information.

2. The information processing apparatus according to claim 1, wherein
the storage unit further stores information about environment regarding the information processing apparatus, and the chip further includes an environment determining unit that determines, when a request for starting up the information processing apparatus is obtained, whether the information processing apparatus is allowed to start up, based on the information about environment stored in the storage unit.

3. The information processing apparatus according to claim 1 or 2, wherein
the information processing apparatus includes a controlling device that controls the information processing apparatus in its entirety except the chip, and the chip further includes a start-up controlling unit that controls start-up of the controlling device based on the determination results of the biometric determining unit and the environment determining unit.

4. The information processing apparatus according to claim 2, wherein
the chip further includes an environment-information updating unit that obtains the information about environment regarding the information processing apparatus and updates the information about environment stored in the storage unit.

5. A start-up method of an information processing apparatus including a chip implemented in the information processing apparatus to independently perform a predetermined process, the method comprising:
storing in a storage unit by the chip, biometric information of a user allowed to operate the information processing apparatus as biometric authentication information; and
biometrically determining by the chip, when obtaining a request for starting up the information processing apparatus, by obtaining biometric information of the user and determining whether the information processing apparatus is allowed to start up, based on the biometric information and the biometric authentication information.

6. The start-up method according to claim 5, wherein
the storing further includes storing information about environment regarding the information processing apparatus in the storage unit, and
the method further includes environmentally determining by the chip, when a request for starting up the information processing apparatus is obtained, whether the information processing apparatus is allowed to start up, based on the information about environment stored in the storage unit.

7. The start-up method according to claim 5 or 6, wherein
the information processing apparatus includes a controlling device that controls the information processing apparatus in its entirety except the chip, and the method further includes
controlling by the chip, start-up of the controlling device based on the determination results in the biometrically determining and the environmentally determining.

8. The start-up method according to claim 6, further including
updating by the chip, the information about environment stored in the storage unit by obtaining the information about environment regarding the information processing apparatus.

9. A start-up program of an information processing apparatus including a chip implemented in the information processing apparatus to independently perform a predetermined process, the program causes the chip to execute:
storing in a storage unit by the chip, biometric information of a user allowed to operate the information processing apparatus as biometric authentication information; and
biometrically determining by the chip, when obtaining a request for starting up the information processing apparatus, by obtaining biometric information of the user and determining whether the information processing apparatus is allowed to start up, based on the biometric information and the biometric authentication information.

10. The start-up program according to claim 9, wherein
the storing further includes storing information about environment regarding the information processing apparatus in the storage unit, and
the program further causes the chip to execute environmentally determining, when a request for starting up the information processing apparatus is obtained, whether the information processing apparatus is allowed to start up, based on the information about environment stored in the storage unit.

11. The start-up program according to claim 9 or 10, wherein
the information processing apparatus includes a controlling device that controls the information processing apparatus in its entirety except the chip, and the program further causes the chip to execute
controlling start-up of the controlling device based on the determination results in the biometrically determining and the environmentally determining.

12. The start-up program according to claim 10, further causes the chip to execute
updating the information about environment stored in the storage unit by obtaining the information about environment regarding the information processing apparatus.
